# EUROPÄISCHE PATENTANMELDUNG

(11) **EP 3 970 974 A1**
(43) Veröffentlichungstag der Anmeldung: **23.03.2022**
(21) Anmeldenummer: 21196871.4
(22) Anmeldetag: 15.09.2021
(51) Int. Cl.: B41F 13/00, B41F 13/004, B41F 13/012, B41F 33/00, H02P 5/00

(54) **VERFAHREN UND VORRICHTUNG ZUM BETREIBEN EINER BOGENDRUCKMASCHINE**

(30) Priorität: 17.09.2020 DE 102020124272
(71) Anmelder: manroland sheetfed GmbH, 63075 Offenbach (DE)
(72) Erfinder: KUBASIAK, Nicolai, 64291 Darmstadt (DE)

(57) **Zusammenfassung**

Die Erfindung betrifft ein Verfahren zur Reduzierung eines Lagefehlers einzelner Teilbilder auf einem Druckbogen in einer Druckmaschine, insbesondere einer Bogenoffsetdruckmaschine, die mit mindestens zwei Antriebsmotoren (M1-M3) zum Erzeugen eines Gesamtantriebsdrehmoments und einer Regelung zum Betreiben der Druckmaschine ausgestattet ist.

Erfindungsgemäß ist dabei vorgesehen, dass das Antriebsdrehmoment der einzelnen Antriebsmotoren in Abhängigkeit des von der Regelung vorgegebenen Gesamtantriebsdrehmoments berechnet und entsprechend angepasst wird, wobei für die Berechnung Funktionen (A-C) verwendet werden, die einen oder mehrere Abschnitte umfassen, wobei mindestens ein Abschnitt entweder einen degressiven, progressiven, proportionalen oder gleichbleibenden Verlauf aufweist.

Weiterhin umfasst die Erfindung auch eine Vorrichtung zur Durchführung des Verfahrens.

## Beschreibung

Die Erfindung betrifft ein Verfahren zur Reduzierung eines Lagefehlers einzelner Teilbilder auf einem Druckbogen in einer Druckmaschine, insbesondere einer Bogenoffsetdruckmaschine, die mit mindestens zwei Antriebsmotoren zum Erzeugen eines Gesamtantriebsdrehmoments und einer Regelung zum Betreiben der Druckmaschine ausgestattet ist, sowie eine entsprechende Vorrichtung dafür. Ausgangspunkt ist eine übliche Bogenoffsetdruckmaschine in Modulreihenbauweise mit einem durchgehenden Räderzug ohne Längswelle zum Antreiben der verschiedenen Module. Der Räderzug und alle angebundenen Teile bilden den Antriebsstrang der Druckmaschine. Stand der Technik ist es, dass das benötigte Gesamtantriebsdrehmoment zum Betreiben der Druckmaschine durch einen Hauptantrieb erzeugt wird. Zur Regelung der Produktionsdrehzahl kommen einschleifige PI-Reglerstrukturen mit gegebenenfalls geringfügigen Modifizierungen zum Einsatz. Darüber hinaus können Bogenoffsetdruckmaschinen auch mit mehreren Antriebsmotoren angetrieben werden. Verschiedene Regelungsstrukturen hierfür finden sich beispielsweise in der Patentschrift DE 10 2018 120 397 A1. Das Antreiben der Druckmaschine mit einem Antriebsmotor führt - aufgrund des Drehmomentbedarfs der Druckwerke - zu einer eindeutigen Drehmomentrichtung innerhalb des Antriebsstrangs. Die im Vergleich zum mittleren Gesamtantriebsdrehmoment kleinen periodischen Störerregungen führen zu keinem Zeitpunkt zum Wechsel der Drehmomentrichtung während des Druckprozesses und die Zahnflanken innerhalb des Räderzugs liegen stets an. Wird das Antriebsmoment mithilfe mehrerer Antriebsmotoren über den Antriebsstrang örtlich verteilt eingespeist, gilt dies nicht mehr allgemein. Die vom Räderzug übertragenden Drehmomente können durch das Verwenden mehreren Antriebsmotoren sehr gering werden oder sogar das Vorzeichen wechseln. Periodischen Störerregungen können bei solchen vergleichsweise geringen übertragenden Drehmomenten innerhalb des Räderzug zum Abheben oder sogar zum Wechsel der Zahnflanken während des Druckprozesses führen und dadurch einen rapiden Abfall der Druckqualität herbeiführen.

**Auf gabe** der Erfindung ist es ein Verfahren und eine Vorrichtung zum Betreiben einer Bogendruckmaschine mit mehreren Antriebsmotoren zu schaffen, welche die Druckqualität, insbesondere bei Bogenoffsetdruckmaschinen, mit vielen Modulen steigert und eine Zahnflankenanlage innerhalb des Räderzugs sicherstellt.

Die **Lösung** der Aufgabe bezüglich des Verfahrens ist in Verbindung mit dem Oberbegriff des Anspruchs 1 **dadurch gekennzeichnet, dass** das Antriebsdrehmoment der einzelnen Antriebsmotoren in Abhängigkeit des von der Regelung vorgegebenen Gesamtantriebsdrehmoments berechnet und entsprechend angepasst wird, wobei für die Berechnung Funktionen verwendet werden, die einen oder mehrere Abschnitte umfassen, wobei mindestens ein Abschnitt entweder einen degressiven, progressiven, proportionalen oder gleichbleibenden Verlauf aufweist.

Die Aufgabe wird auch in Verbindung mit dem Oberbegriff des Anspruchs 2 **dadurch gelöst, dass** das von der Regelung vorgegebene Gesamtantriebsdrehmoment in Abhängigkeit von Zuständen der Druckmaschine, insbesondere Bogenoffsetdruckmaschine, wie Drehzahl, Ist-Strom der Antriebsmotoren und/oder Erwärmung auf die einzelnen Antriebsmotoren aufgeteilt wird, wobei für die Aufteilung Funktionen verwendet werden, die einen oder mehrere Abschnitte umfassen, wobei mindestens ein Abschnitt entweder einen degressiven, progressiven, proportionalen oder gleichbleibenden Verlauf aufweist. Die Aufteilung wird nicht vom vorgegebenen Gesamtantriebsdrehmoment abhängig gemacht, sondern von anderen Druckmaschinenzuständen.

Die **Lösung** der Aufgabe bezüglich der Vorrichtung ist durch die Merkmale des Anspruchs 9 gekennzeichnet.

Vorteilhafte Weiterbildungen ergeben sich aus den Unteransprüchen, der Beschreibung und den Zeichnungen.

Der maximale zu erwartende Gesamtantriebsdrehmomentbedarf zum Betreiben der Druckmaschine wird in Abhängigkeit der Anzahl der vorhandenen Module abgeschätzt. Dieser ergibt sich durch die Addition des zu erwartenden maximalen Drehmoments aller Module. Des Weiteren werden die jeweiligen Antriebsdrehmomente für die Antriebsmotoren durch einer Funktion vorgegeben, die in Abhängigkeit des maximal zu erwartenden Gesamtantriebsdrehmomentbedarfs ausgelegt werden. Die Funktionen bilden aus einem von einem Regler vorgegebenen Gesamtantriebsdrehmoment die Antriebsdrehmomente für die einzelnen Antriebsmotoren. Die Funktionen umfassen einen ersten Abschnitt, den des Grundlastbereichs und einen zweiten Abschnitt, den des Arbeitsbereichs. Die ermittelten Antriebsdrehmomente werden an die im Antriebsstrang angeordneten Antriebsmotoren übertragen. Die unterschiedlichen Antriebsdrehmomente werden an unterschiedlichen Stellen des Antriebsstrangs übertragen, wodurch Lagefehler aufgrund geänderter Gesamtantriebsdrehmomente im Bereich der Drehmomentkompensation kompensiert werden.

Weiterbildungsgemäß ist vorgesehen, dass die Summe aller Antriebsdrehmomente das von der Regelung vorgegebene Gesamtantriebsdrehmoment ergibt.

In vorteilhafter Weise weisen die Funktionen mit Funktionseingangsgrößen mindestens einen Abschnitt auf in dem eine Änderung der Funktionseingangsgrößen eine unterproportionale Änderung des kumulierten Lagefehlers erzeugt. Die Zustände der Druckmaschine, insbesondere Bogenoffsetdruckmaschine, wie Drehzahl, gemessener summierter Ist-Strom der Antriebsmotoren, Erwärmung oder Gesamtantriebsdrehmoment bilden die Funktionseingangsgrößen. Vorteilhafterweise wird die einzelne Funktion in jedem Abschnitt mittels einer Gradengleichung gebildet.

Weiterbildungsgemäß ist vorgesehen, dass die Funktionen der Antriebsmotoren mindestens in eine erste Gruppe und eine zweite Gruppe unterteilt werden. Es sind aber auch mehrere Gruppen denkbar. Die Funktionen können beispielsweise in die drei Gruppen Aufbau (erste Gruppe), Kompensation (zweite Gruppe) und Neutral (dritte Gruppe) zusammengefasst werden, wobei der Gruppe Neutral (dritte Gruppe) auch kein Motor angehören kann. Der Stellbereich für das Gesamtantriebsdrehmoments kann in einen ersten Abschnitt, den Grundlastbereich, und in einen zweiten Abschnitt, den Arbeitsbereich, aufgeteilt werden.

In vorteilhafter Weise übernehmen die Antriebsmotoren der zweiten Gruppe weniger als 50% des vorgegebenen Gesamtantriebsdrehmoments in einem ersten Abschnitt. Beispielsweise übernehmen die Antriebsmotoren mit den Funktionen aus der ersten und dritten Gruppe, Aufbau und Neutral, mindestens 50% des vorgegebenen Gesamtantriebsdrehmoments in einem ersten Abschnitt, den Grundlastbereich. Hierfür können beispielsweise lineare Funktionen verwendet werden, deren Steigung im ersten Abschnitt immer größer im Vergleich zu den Funktionen in der zweiten Gruppe, Kompensation, sind.

Vorteilhafterweise übernehmen die Antriebsmotoren der ersten Gruppe weniger als 50% von Änderungen des vorgegebenen Gesamtantriebsdrehmoments in einem zweiten Abschnitt. Beispielsweise übernehmen die Antriebsmotoren mit den Funktionen aus der zweiten und dritten Gruppe, Kompensation und Neutral, mindestens 50% einer Änderung des vorgegebenen Gesamtantriebsdrehmoments in einem zweiten Abschnitt.

Alternativ könnte die Aufteilung nicht vom Drehmoment oder Motorstrom sondern von anderen Zuständen der Maschine wie Drehzahl, Erwärmung und Motorströmen gemacht werden.

Eines der wichtigsten Merkmale für die Druckqualität ist die Passgenauigkeit, welche meist stichprobenartig während des Druckprozesses überprüft wird. Hierzu werden häufig Messmarkierungen verwendet, wie beispielsweise Passerkreuze. Diese Markierungen sind auf jedem Teilbild vorhanden und werden während des Druckprozesses in jedem Druckmodul übereinander gedruckt. Die Messmarkierungen können visuell oder auch elektronisch ausgewertet werden, insbesondere dann, wenn diese komplexer aufgebaut sind. Sind keine Lagefehler der einzelnen Teilbilder zueinander vorhanden, so liegen die Passerkreuze exakt übereinander. Wenn die Passerkreuze nicht übereinander liegen, dann sind relative Lagefehler der Teilbilder zueinander vorhanden. Schließlich kann insbesondere ein sich von Druckbogen zu Druckbogen verändernder Lagefehler zu einer nicht mehr zufriedenstellenden Druckqualität führen.

Die Lagefehler können in einen mittleren konstanten Teil, dem Register, und einen alternierenden (relativen) Teil, dem Passer, aufgeteilt werden. Als Passer oder Farbpasser ist in der Drucktechnik somit die Genauigkeit gemeint, in der ein Druckbogen geometrisch reproduziert wird. Die mittleren absoluten Lagefehler gehen hier nicht ein, sondern nur die schwankenden relativen Lagefehler der einzelnen Teilbilder zwischen den produzierten Druckbögen sind relevant. Das Register, auch Farbregister genannt, beschreibt die Lagefehler, die sich am Arbeitspunkt der Druckmaschine stationär einstellen und für jeden produzierten Druckbogen reproduzierbar für einen konstanten Druckmaschinenzustand gelten. Diese beeinflussen nicht die Reproduzierbarkeit und können im Gegensatz zum Passer bei modernen Druckmaschinen durch ein relatives, statisches Verschieben der Teilbilder zueinander für nachfolgende Druckbögen korrigiert werden. Die Lagefehler in Bogenlaufrichtung werden als Umfangsregister bzw. Umfangspasser und quer dazu als Seitenregister bzw. Seitenpasser bezeichnet.

Eine unzureichende Passgenauigkeit kann zum drucktechnischen Effekt des Dublierens führen. Das Dublieren entsteht durch die Rückspaltung der Druckfarbe eines bereits gedruckten Teilbilds in nachfolgenden Modulen. Durchläuft ein bereits mit Teilbildern bedruckter Druckbogen einen weiteren Druckspalt, so geht in der Regel ein Teil der bereits zuvor gedruckten Farbe zurück auf den Gummituchzylinder (Farbrückspaltung). Weicht die Lage der Teilbilder auf nachfolgenden Druckbögen zum vorherigen Druckbogen ab, so wird die auf dem Gummituch rückgespaltete Farbe nicht wieder exakt auf das Teilbild des nachfolgenden Druckbogens gedruckt und verursacht **dadurch** schattenartige Konturen des zuvor gedruckten Teilbilds, es kommt zum Dublieren.

Zur Untersuchung der Passgenauigkeit einer Druckmaschine wird unter anderem der Verlauf der Umfangspasser insbesondere von benachbarten Modulen über unmittelbar hintereinander produzierte Druckbögen herangezogen und zusammenfassend als Übergabepasser bezeichnet. Auch der Verlauf des Maschinenpassers als Lagefehler zwischen den Teilbildern des ersten und des letzten Druckmoduls kann zur Bewertung der Passgenauigkeit herangezogen werden. Durch Auswertung des Passers von gedruckten Druckbögen kann der konstante Lagefehler durch Mittelwertbildung festgestellt und mithilfe der Registerkorrektur für noch zu druckende Druckbögen kompensiert werden. Danach bleiben nur Abweichungen vom stationären, arbeitspunktabhängigen Mittelwert übrig. Diese relativen Abweichungen zum Mittelwert werden häufig zur Bewertung der Passgenauigkeit der Druckmaschine verwendet.

Der Arbeitspunkt der Druckmaschine wird neben der Produktionsdrehzahl von vielen Faktoren beeinflusst. Zum Beispiel kann eine Änderung des Erwärmungszustandes der Druckmaschine zu einer Änderung des Gesamtantriebsdrehmoments und damit einhergehend zu einem anderen Umfangsregister führen. Die Änderung des Erwärmungszustandes erfolgt vergleichsweise langsam, so dass in diesem Fall von einem Registerdrift gesprochen wird. Neben Passerschwankungen verursachen auch quasistationäre Verschiebungen während Beschleunigungsvorgängen unerwünschte Effekte wie Dublieren. Insbesondere können so nach dem Einrichten der Druckmaschine oder bei Wiederanlaufvorgängen (durch die Beschleunigung der druckenden Druckmaschine auf Produktionsdrehzahl) aufgrund unzureichender Druckqualität unbrauchbare Druckbögen (Makulatur) produziert werden. Die hier betrachteten Änderungen innerhalb des Antriebsstrangs wirken sich insbesondere auf den Umfangspasser aus, da sie zu erheblichen Lagefehlern der Teilbilder auf dem Druckbogen in Bogenlaufrichtung führen können. Diese relativen Lagefehler der Teilbilder in Umfangsrichtung dürfen beim Mehrfarbendruck einige Mikrometer bis wenige hundertstel Millimeter nicht überschreiten. Zu große Lagefehler (Passerabweichungen) führen zu unerwünschten drucktechnischen Effekten, wie dem Dublieren. Hierdurch auftretende Schwankungen im Tonwert können wiederum zu unerwünschten Farbschwankungen zwischen hintereinander bedruckten Druckbögen führen. Ebenfalls kann die druckwerksbezogene Tonwertstabilität - als Maß für die maximale Differenz zum erwarteten Tonwert eines Druckwerks über die Zeit - negativ beeinflusst werden. Im Weiteren werden Änderungen der Winkeldifferenzen benachbarter bogenführender Teile in Bogenlaufrichtung betrachtet, die Lagefehler des Druckbogens während des Transports durch die Druckmaschine hervorrufen, wodurch anschließend gedruckte Teilbilder einen Lagefehler auf den Druckbogen aufweisen, die sich in Abweichungen des Passers und des Registers in Umfangsrichtung niederschlagen.

Idealerweise bewegen sich alle Teile des Antriebsstrangs exakt winkellagesynchron. Verschiedene Effekte wie ein geänderter Drehmomentbedarf der einzelnen Module führen jedoch zu Änderungen der Winkeldifferenz der einzelnen sich bewegenden Teile. Diese Winkeldifferenzänderungen zueinander können zu Lagefehler des transportierten Druckbogens und damit einhergehend zu Lagefehlern der zu druckenden Teilbilder auf dem Druckbogen führen, die nicht tolerierbaren Abweichungen des Umfangspassers hervorrufen. Hierbei sind insbesondere die Winkeldifferenzänderungen benachbarter bogenführender Teile während des Übergabeprozess des Druckbogens von einem bogenführenden Teil zum Nächsten (Übergabepasser) als kritisch einzustufen. Eine relative Lageabweichungen beim Greifen des Druckbogens zwischen dem übernehmenden und dem übergebenden Greifersystems durch die erwähnten Winkeldifferenzänderung erzeugt einen Lagefehler des Druckbogens, der für den restlichen Weg des Druckbogens durch die Druckmaschine erhalten bleibt und anschließend gedruckte Teilbilder haben einen entsprechenden Lagefehler auf dem Druckbogen. In ungünstigen Fällen summieren sich die einzelnen Lagefehler zu einem wesentlich höheren kumulierten Lagefehler auf. Sind die einzelnen Lagefehler jedes Druckbogens gleich, kann dies mit einer statischen Korrektur, der Umfangsregisterkorrektur, für noch zu druckende Bögen ausgeglichen werden. Variiert der Lagefehler über die Zeit (Passer), so lässt sich dies nicht über eine Registerkorrektur kompensieren.

Die Bogendruckmaschine, insbesondere Bogenoffsetdruckmaschine, ist in Modulreihenbauweise aufgebaut. Die verschiedenen Module werden über einen durchgehenden Räderzug angetrieben. Die Module können als Druckwerke, Lackwerke, Transfermodule, Trocknermodule, Wendemodule usw. ausgebildet sein. Zum Bedrucken der Druckbögen werden diese zunächst am Anleger von einem Stapel vereinzelt und über einen Bändertisch kontinuierlich dem ersten Modul schuppenförmig zugeführt. Im ersten Modul wird der einzelne Druckbogen auf Maschinendrehzahl beschleunigt. Der Druckbogen durchläuft die folgenden Module und wird anschließend am Ausleger abgebremst und wieder zu einem Stapel abgelegt. Der Bogen wird beim Transport durch die Maschine mittels Greifern gehalten, die sich die Druckbögen innerhalb und zwischen den einzelnen Modulen übergeben. Durch den modularen Aufbau kann eine Druckmaschine an spezifische Kundenwünsche durch eine variable Anzahl an Modulen und Modulkombinationen angepasst werden. Es besteht beispielsweise die Möglichkeit ein Wendemodul mit einer Wendetrommel vorzusehen, um den Druckbogen zu wenden und auch die Druckbogenrückseite zu bedrucken.

Die meisten Bogenoffsetdruckmaschinen werden mit einem Antriebsmotor angetrieben. Dabei wird die gesamte Antriebsleistung an einem Ort, dem Eintriebsort, in den Antriebsstrang eingespeist. Der Eintriebsort in der Druckmaschine ist variabel. Er kann beispielsweise im ersten, dritten oder einem mittleren Modul liegen. Das gesamte Drehmoment kann auch über eine Längswelle auf mehrere Eintriebsorte verteilt werden. Mit diesem zusätzlich konstruktiven Aufwand einer Längswelle werden Teile des Antriebsstrangs neben dem Räderzug zusätzlich verbunden und die mechanische Steifigkeit des Antriebsstrangs erhöht. Damit können lastabhängige Winkeldifferenzänderungen zwischen benachbarten rotierenden Teilen innerhalb des Räderzugs reduziert werden.

Mit dem Trend zu immer schnelleren Druckmaschinen, der steigenden Modulanzahl von spezialisierten Druckmaschinen und zusätzlichen Funktionen wächst die benötigte Antriebsleistung. Das Einspeisen immer höherer Antriebsleistungen über einen Eintrieb führt zunehmend zu Problemen. Das gesamte Drehmoment fließt über ein Eintriebsritzel auf ein Zahnrad im Räderzug, von dem es sich dann verteilt. Diese Zahnräder sind erheblichen Belastungen ausgesetzt, müssen je nach Antriebsleistung hohen mechanischen Anforderungen genügen und so gegebenenfalls von den restlichen Zahnrädern konstruktiv abweichen. Darüber hinaus können Änderungen des Gesamtantriebsdrehmoments der Druckmaschine zu erheblichen Änderungen der Winkeldifferenzen innerhalb des Antriebsstrangs führen, woraus letztendlich Änderungen des Umfangsregisters resultieren. Solche Änderungen können beispielsweise durch einen veränderten Erwärmungszustand der Druckmaschine oder eine geänderte Produktionsdrehzahl auftreten. Materialeinsparungen bei modernen Druckmaschinen, die zu einer Reduzierung der mechanischen Steifigkeit des Räderzugs führen, können diesen Effekt verstärken. Mit einer Verteilung der Antriebsleistung auf mehrere Eintriebsorte kann auf konstruktiv abweichende Zahnräder im Räderzug verzichtet und das Problem der Änderung des Umfangsregisters aufgrund eines geänderten Drehmomentbedarfs der Druckmaschine vermindert werden. Neben der bereits erwähnten Aufteilung durch eine Längswelle können auch mehrere Antriebsmotoren an unterschiedlichen Eintriebsorten verwendet werden.

Der Drehmomentfluss innerhalb des Räderzugs ergibt sich zwangsläufig, sofern nur an einem Ort in den Räderzug eingespeist wird. Mithilfe einer mechanischen Längswelle könnte das gesamte Antriebsdrehmoment eines Antriebsmotors an verschiedene Orte zur Einspeisung in den Räderzug verteilt werden. Die sich hierbei einstellende Drehmomentaufteilung lässt sich jedoch nicht während des Druckmaschinenbetriebs ändern. Das Aufbringen des benötigten Gesamtantriebsdrehmoments durch mehrere örtlich verteilte Antriebsmotoren erlaubt dagegen auch die Änderung der Aufteilung des Gesamtantriebsdrehmoments auf die Antriebsmotoren während des Betriebs der Druckmaschine und damit einhergehend die Beeinflussung des Drehmomentflusses im Räderzug. Dies lässt sich zur Vermeidung von Zahnflankenabheben und zur Reduzierung von Registeränderungen und Passerschwankungen in Umfangsrichtung nutzen.

Mithilfe einer vom Gesamtantriebsdrehmoment abhängigen Aufteilung des Gesamtantriebsdrehmoment auf die Antriebsmotoren können Winkeldifferenzen, die aufgrund eines geänderten Drehmomentflusses innerhalb des Räderzugs entstehen können, kompensiert werden. Erfindungsgemäß wird je Motor oder Motorgruppe eine Funktion verwendet, die in Abhängigkeit des vom Regler vorgegebenen Gesamtantriebsdrehmoments das zu stellende Drehmoment des jeweiligen Motors bzw. der Motorgruppe berechnet. Dadurch wird eine vom Gesamtantriebsdrehmoment abhängige und damit variable Aufteilung des Gesamtantriebsdrehmoments auf die einzelnen Motoren bzw. Motorengruppen erreicht. Die gewählten Funktionen weisen entweder einen degressiven, progressiven, proportionalen oder gleichbleibenden Verlauf auf. Ein degressiver Verlauf liegt vor, wenn das vom Antriebsmotor zu stellende Drehmoment mindestens in einem Abschnitt der Funktion unterproportional steigt, d.h. bspw. eine Verdopplung des Funktionseingangswerts (vorgegebenes Gesamtantriebsdrehmoment) führt zu einer Erhöhung des Funktionsausgangswerts (zu stellendes Drehmoment), die kleiner als der doppelte Ausgangswert ist. Bei einem progressiven Verlauf steigt das zu stellende Drehmoment mindestens in einem Abschnitt der Funktion überproportional, womit bspw. eine Verdopplung des Funktionseingangswerts den Funktionsausgangswert mehr als Verdoppelt. Ein proportionaler Verlauf liegt vor, wenn der Funktionsausgangswert linear mit dem Funktionseingangswert steigt. Bei einem gleichbleibenden Verlauf bleibt der Funktionsausgangswert konstant und ist damit unabhängig vom Funktionseingangswert.

Ein wichtiger Aspekt bei der Antriebsregelung, insbesondere im Fall von mehreren Antriebsmotoren, ist die Gefahr eines Zahnflankenabhebens im Räderzug des Antriebsstrangs. Dies muss vermieden werden, da hierdurch sich die Druckqualität massiv verschlechtert und das Druckergebnis praktisch unbrauchbar wird. Auch ein Abweichen, insbesondere ein Absinken, des übertragenden Drehmoments ist nur in gewissen Grenzen tolerierbar, da die Steifigkeit der Zahnradverbindungen vom übertragenden Drehmoment abhängt und die häufige Annahme, die Verbindung als lineare, mechanische Feder zu betrachten, nur für einen Arbeitsbereich gilt.

Um die Vorteile durch die Verwendung mehrerer Antriebsmotoren mit einer vom Gesamtantriebsdrehmoment abhängigen Drehmomentaufteilung zu zeigen, werden in den Figuren drei Beispiele aufgeführt. Ein Beispiel mit einem Antriebsmotor, ein Beispiel mit drei Antriebsmotoren und einer festen Drehmomentaufteilung und ein Beispiel mit drei Antriebsmotoren und einer möglichen variablen Drehmomentaufteilung.

Die Erfindung wird anhand von Zeichnungen erläutert:
- Fig. 1: zeigt eine schematische Seitenansicht einer modulartig aufgebauten Bogendruckmaschine,
- Fig. 2: zeigt den Drehmomentfluss zwischen den Modulen für den Antriebsdrehmomentbedarf von einer Drehmomenteinheit je Modul mit einem Antriebsmotor im dritten Modul,
- Fig. 3: zeigt den Drehmomentfluss zwischen den Modulen für den Antriebsdrehmomentbedarf von zwei Drehmomenteinheiten je Modul mit einem Antriebsmotor im dritten Modul,
- Fig. 4: zeigt die entstehenden Winkeldifferenzen bzw. Lagefehler zwischen den einzelnen Modulen der Druckmaschine, die durch eine Erhöhung des Drehmomentbedarfs je Modul von einer auf zwei Drehmomenteinheiten zusätzlich entstehen,
- Fig. 5: zeigt den Drehmomentfluss zwischen den Modulen für den Antriebsdrehmomentbedarf von einer Drehmomenteinheit je Modul mit insgesamt drei Antriebsmotoren (im ersten, dritten und sechsten Modul) mit einer festen Drehmomentaufteilung,
- Fig. 6: zeigt den Drehmomentfluss zwischen den Modulen für den Antriebsdrehmomentbedarf von zwei Drehmomenteinheiten je Modul mit insgesamt drei Antriebsmotoren (im ersten, dritten und sechsten Modul) mit einer festen Drehmomentaufteilung,
- Fig. 7: zeigt die aus Figur 5 und 6 resultierenden Winkeldifferenzen bzw. Lagefehler zwischen den einzelnen Modulen der Druckmaschine, die durch eine Erhöhung des Drehmomentbedarfs je Modul von einer auf zwei Drehmomenteinheiten zusätzlich entstehen,
- Fig. 8: zeigt den Drehmomentfluss zwischen den Modulen für den Antriebsdrehmomentbedarf von einer Drehmomenteinheit je Modul mit insgesamt drei Antriebsmotoren (im ersten, dritten und sechsten Modul) mit einer möglichen variablen Drehmomentaufteilung,
- Fig. 9: zeigt den Drehmomentfluss zwischen den Modulen für den Antriebsdrehmomentbedarf von zwei Drehmomenteinheiten je Modul mit insgesamt drei Antriebsmotoren (im ersten, dritten und sechsten Modul) mit einer möglichen variablen Drehmomentaufteilung,
- Fig. 10: zeigt die aus Figur 8 und 9 resultierenden Winkeldifferenzen bzw. Lagefehler zwischen den einzelnen Modulen der Druckmaschine, die durch eine Erhöhung des Drehmomentbedarfs je Modul von einer auf zwei Drehmomenteinheiten zusätzlich entstehen,
- Fig. 11: zeigt die für Figur 8 und 9 verwendete vom Gesamtantriebsdrehmoment abhängige Aufteilung des Gesamtantriebsdrehmoments auf die drei Antriebsmotoren,
- Fig. 12: zeigt die kumulierten Winkeldifferenzen zwischen den Modulen bzw. den Lagefehler den der Druckbogen beim Lauf durch die Maschine erfährt.

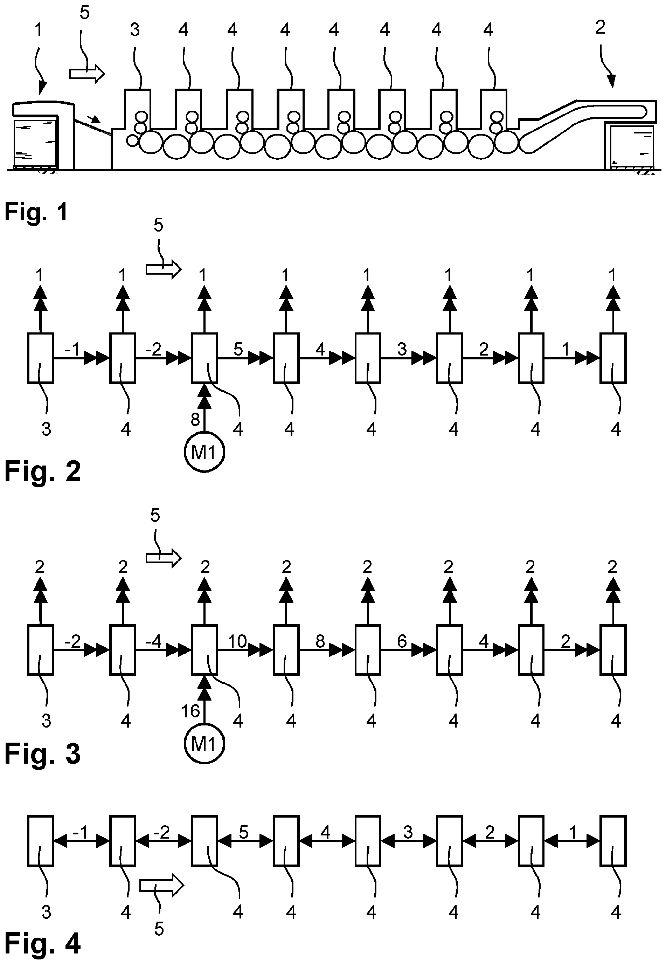

Figur 1 zeigt eine schematische Seitenansicht einer modulartig aufgebauten Bogendruckmaschine, insbesondere einer Bogenoffsetdruckmaschine. Sie zeigt einen Anleger 1, von dem Druckbogen von einem Stapel vereinzelt und über einen Bändertisch kontinuierlich dem ersten Modul 3 schuppenförmig zugeführt werden.

An den Anleger 1 und das erste Modul 3 schließen sich weitere Module 4 an. Die Module 3, 4 können Druckwerke, Lackwerke, Transfermodule, Wendemodule usw. sein. Die verschiedenen Module 3, 4 werden über einen durchgehenden Räderzug angetrieben und bilden zusammen den Antriebsstrang. Im ersten Modul 3 wird der einzelne Druckbogen auf Maschinendrehzahl beschleunigt. In Bogenlaufrichtung 5 durchläuft der Druckbogen die weiteren Module 4 und wird anschließend am Ausleger 2 abgebremst und wieder zu einem Stapel abgelegt. Der Druckbogen wird beim Transport durch die Maschine mittels Greifern gehalten. Durch den modularen Aufbau kann eine Druckmaschine an spezifische Kundenwünsche durch eine variable Anzahl an Modulen 3, 4 und Modulkombinationen angepasst werden.

In den Figuren 2 bis 10 sind drei Beispiele dargestellt, um die Vorteile durch die Verwendung mehrerer Antriebsmotoren mit einer vom Gesamtantriebsdrehmoment abhängigen Drehmomentaufteilung zu zeigen.
- Figur 2 bis 4: erste Beispiel mit einem Antriebsmotor M,

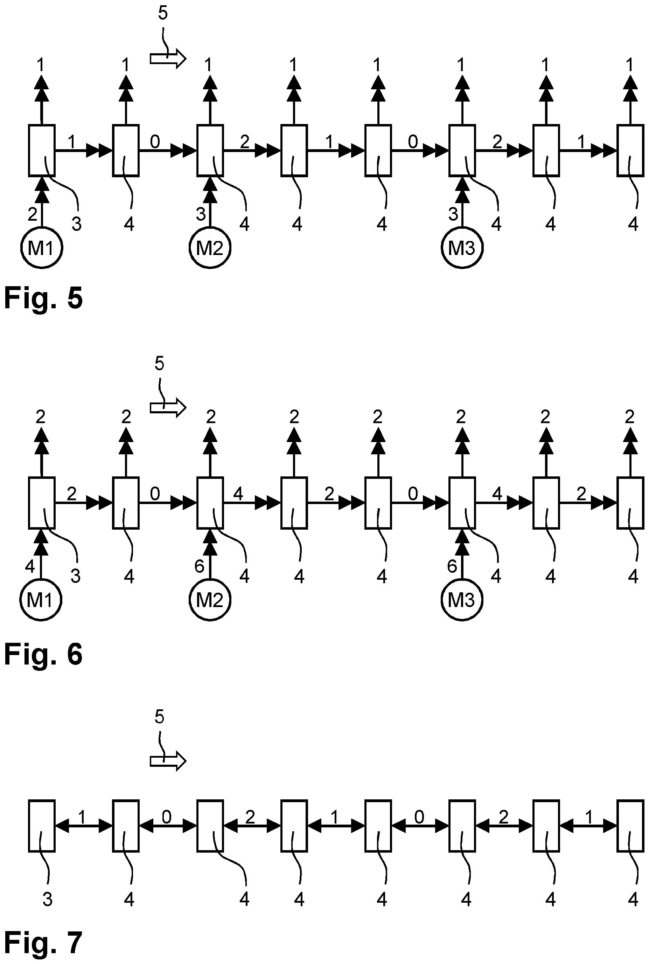

- Figur 5 bis 7: zweite Beispiel mit drei Antriebsmotoren M und einer festen Drehmomentaufteilung,

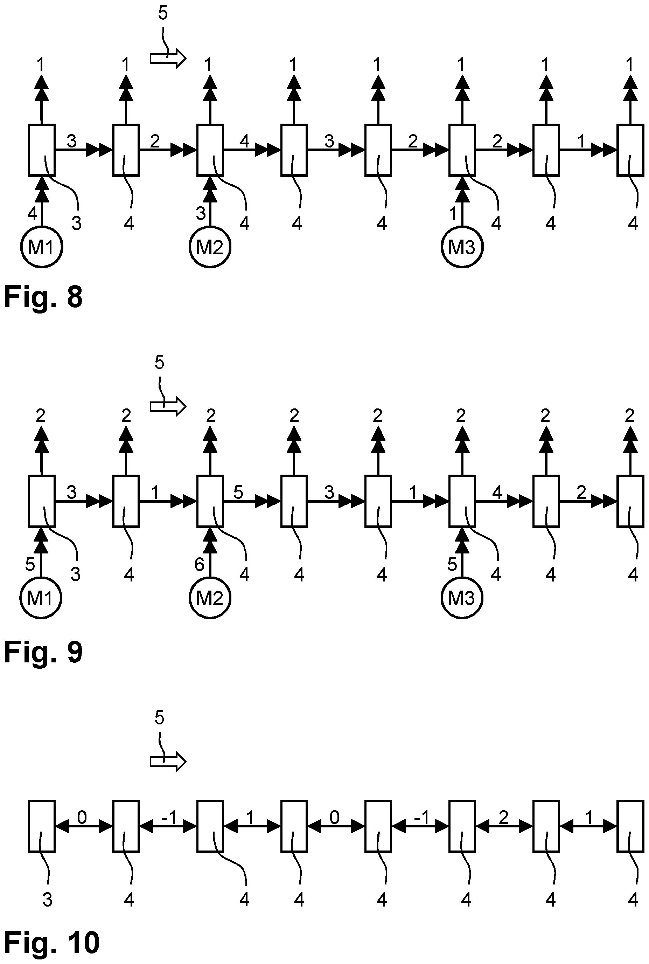

- Figur 8 bis 10: dritte Beispiel mit drei Antriebsmotoren M und einer möglichen variablen Drehmomentaufteilung.

Figur 2 zeigt einen beispielhaften, vereinfachten Antriebsstrang einer Druckmaschine mit einem ersten Modul 3 und weiteren Modulen 4, die sich in Bogenlaufrichtung 5 dem ersten Modul 3 anschließen. Insgesamt sind acht Module dargestellt. Der alleinige erste Antriebsmotor M1 sitzt im dritten Modul 4 der Bogendruckmaschine. Zu erkennen ist der Drehmomentfluss zwischen den Modulen 3, 4, der vom nicht gezeigten Räderzug, der die einzelnen Module 3, 4 verbindet, übertragen wird. Die einzelnen Module 3, 4 verbrauchen je ein Antriebsdrehmoment von einer gedachten Drehmomenteinheit. Die zum Betreiben dieser Druckmaschine nötigen acht Drehmomenteinheiten werden entsprechen vom ersten Antriebsmotor M1 im dritten Modul 4 aufgebracht.

Das erste Modul 3 verbraucht eine Drehmomenteinheit. Folglich wird an das nächste Modul 4 eine negative Drehmomenteinheit weitergegeben. Das nächste Modul 4 verbraucht wieder eine Drehmomenteinheit, folglich werden insgesamt zwei Drehmomenteinheiten an das dritte Modul 4 weitergegeben. In diesem dritten Modul 4 befindet sich der erste Antriebsmotor M1, der die zum Betreiben der Druckmaschine nötigen acht Drehmomenteinheiten aufbringt. Von den acht aufgebrachten Drehmomenteinheiten des ersten Antriebsmotors M1 wird eine Drehmomenteinheit vom dritten Modul 4 verbraucht. Die insgesamt zwei Drehmomenteinheiten, die an das dritte Modul 4 weitergegeben wurden, gehen ebenfalls von den acht aufgebrachten Drehmomenteinheiten des ersten Antriebsmotors M1 ab. Somit werden fünf Drehmomenteinheiten an das weitere Modul 4 weitergegeben. Diese werden bis zum Ende der Maschine durch die restlichen Module 4 mit je einer Drehmomenteinheit verbraucht.

Figur 3 zeigt den gleichen beispielhaften vereinfachten Antriebsstrang einer Druckmaschine mit insgesamt acht Modulen 3, 4, wie Figur 2. Die einzelnen Module 3, 4 verbrauchen hier jedoch zwei Drehmomenteinheiten. Mit der Änderung des Drehmomentbedarfs der Module 3, 4, ändert sich auch entsprechend der Drehmomentfluss.

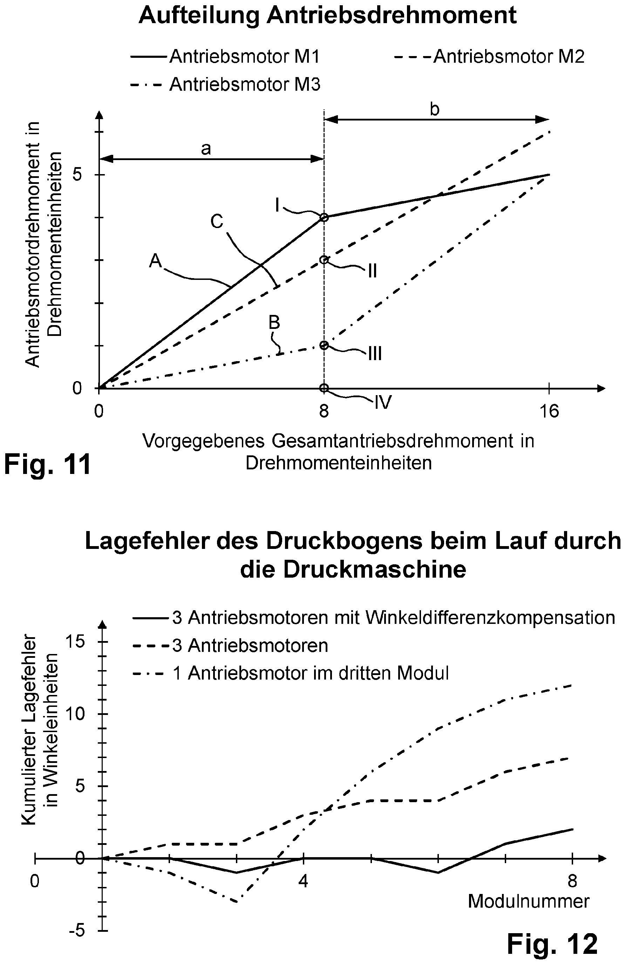

Die Erhöhung der übertragenen Drehmomente zwischen den Modulen 3, 4 führen, aufgrund von Nachgiebigkeiten innerhalb des Antriebsstrangs, zu einer Änderung der Winkeldifferenz innerhalb des Räderzugs. In der Regel kann in einem weiten Arbeitsbereich der Zusammenhang zwischen dem jeweils übertragenen Drehmoment und der daraus entstehenden Winkeldifferenz zwischen den benachbarten Modulen 3, 4 als linear angenommen werden. Zur Verdeutlichung wird definiert, dass je übertragender Drehmomenteinheit eine Winkeldifferenzeinheit entsteht. Figur 4 zeigt die entstehenden Winkeldifferenzen zwischen den einzelnen Modulen 3, 4 der Druckmaschine, die durch eine Erhöhung des Drehmomentbedarfs je Modul von einer auf zwei Drehmomenteinheiten zusätzlich entstehen. Beim Transport des Druckbogens durch die Druckmaschine kommt es so, während der Übergabe des Druckbogens zwischen benachbarten Modulen 3, 4 aufgrund der Winkeldifferenzen, zu entsprechenden Lagefehlern der Übergebenen Greifersysteme und der Druckbogen wird mit einem Lagefehler übergeben. Dieser Lagefehler bleibt während des restlichen Transports des Druckbogens durch die Druckmaschine erhalten und verursacht Lagefehler der Teilbilder auf dem Druckbogen. Die Lagefehler an den einzelnen Übergabeorten kumulieren sich zu einem Gesamtlagefehler des Druckbogens bis zum Ende des Bogentransportes auf. Dieser kumulierte Verlauf des Lagefehlers den der Druckbogen während des Transports durch die Druckmaschine erfährt ist neben anderen in Figur 12 gezeigt.

Figur 5 zeigt beispielhaft einen vereinfachten Antriebsstrang einer Druckmaschine mit insgesamt acht Modulen 3, 4 und drei Antriebsmotoren M. Der erste Antriebsmotor M1 befindet sich im ersten Modul 3. Der zweite Antriebsmotor M2 befindet sich im dritten Modul 4 und der dritte Antriebsmotor M3 befindet sich im sechsten Modul 4. Es wird der Drehmomentfluss analog zur Figur 2 für den Drehmomentbedarf von einer Drehmomenteinheit je Modul 3, 4 und einer gewählten festen Aufteilung des Gesamtantriebsdrehmoments auf die drei Antriebsmotoren M dargestellt.

Figur 6 zeigt beispielhaft den gleichen vereinfachten Antriebsstrang einer Druckmaschine mit insgesamt acht Modulen 3, 4 und drei Antriebsmotoren M1, M2, M3, wie Figur 5. Jedoch ist hier der Drehmomentfluss für einen verdoppelten Drehmomentbedarf je Modul 3, 4 abgebildet.

Figur 7 zeigt die daraus resultierenden Winkeldifferenzen. Im Vergleich zu Figur 4 ist ein Rückgang der Winkeldifferenzen bis hin zu Winkeldifferenzen die sich nicht ändern zu erkennen.

Figur 8 zeigt beispielhaft ein vereinfachten Antriebsstrang einer Druckmaschine mit insgesamt acht Modulen 3, 4 und drei Antriebsmotoren M. Der erste Antriebsmotor M1 befindet sich im ersten Modul 3. Der zweite Antriebsmotor M2 befindet sich im dritten Modul 4 und der dritte Antriebsmotor M3 befindet sich im sechsten Modul 4. Die einzelnen Module 3, 4 verbrauchen je ein Drehmoment von einer gedachten Drehmomenteinheit. Es wird der Drehmomentfluss analog zur Figur 2 und 5 für den Drehmomentbedarf von einer Drehmomenteinheit je Modul 3, 4 und einer möglichen variablen Aufteilung des gesamten Antriebsdrehmoments auf die drei Antriebsmotoren M dargestellt. Es wird also in Figur 8 das Antreiben einer Druckmaschine analog zu Figur 5 mit einer gesamtantriebsdrehmomentabhängigen Drehmomentaufteilung gezeigt.

Figur 9 zeigt den gleichen beispielhaften vereinfachten Antriebsstrang einer Druckmaschine mit insgesamt acht Modulen 3, 4 und drei Antriebsmotoren M, wie Figur 8. Jedoch ist hier der Drehmomentfluss für einen verdoppelten Drehmomentbedarf je Modul 3, 4 und eine variable Aufteilung des Gesamtantriebsdrehmoments auf die drei Antriebsmotoren M abgebildet. Es wurde eine geänderte Aufteilung des Gesamtantriebsdrehmoments vorgenommen.

Figur 10 zeigt die daraus resultierenden Winkeldifferenzen. Durch die geänderte Aufteilung des Gesamtantriebsdrehmoments entstehen auch negative Winkeldifferenzänderungen ohne das ein Vorzeichenwechsel im Drehmomentenfluss zwischen Figur 8 und 9 auftritt.

Figur 11 zeigt zu dem dargestellten Beispiel in den Figuren 8 und 9 das vom jeweiligen Antriebsmotor M eingebrachte Drehmoment in Abhängigkeit des Gesamtantriebsdrehmoments. Dabei zeigt die Funktion des ersten Antriebsmotors M1, dargestellt als Volllinie, einen degressiven Verlauf. Die Funktion des zweiten Antriebsmotors M2, dargestellt als Strichlinie, zeigt einen proportionalen Verlauf. Die Funktion des dritten Antriebsmotors M3, dargestellt als Strichpunktlinie, zeigt einen progressiven Verlauf. Die Funktionen können in einen ersten Abschnitt a und einen zweiten Abschnitt b unterteilt werden. Es sind aber auch mehrere Abschnitte denkbar. Das von der Regelung vorgegebene Gesamtantriebsdrehmoment IV von beispielsweise acht Drehmomenteinheiten wird auf die Antriebsmotoren M verteilt.

Anhand der Funktionen in Figur 11 werden die jeweiligen Werte für die einzelnen Antriebsmotoren ermittelt. Der Wert I für den ersten Antriebsmotor M1 plus den Wert II für den zweiten Antriebsmotor M2 plus den Wert für den dritten Antriebsmotor M3 ergeben das vorgegebene Gesamtantriebsdrehmoment IV, was dem in Figur 8 gezeigten Arbeitspunkt entspricht. Die Summe aller Antriebsdrehmomente ergeben im gewählten Beispiel somit das von der Regelung vorgegebene Gesamtantriebsdrehmoment IV. Des Weiteren können die Funktionen der Antriebsmotoren M mindestens in eine erste Gruppe A, Antriebsmotor 1, und eine zweite Gruppe B, Antriebsmotor 3, zugeordnet werden. Zusätzlich können noch weitere Gruppen wie die Gruppe C, Antriebsmotor 2, definiert werden. Die Antriebsmotoren M außer die mit den Funktionen der zweiten Gruppe B übernehmen mindestens 50 % des vorgegebenen Gesamtantriebsdrehmoments im ersten Abschnitt a. Der Antriebsmotor M3 mit der Funktion aus der zweiten Gruppe B, übernimmt einen wesentlich geringeren Anteil des vorgegebenen Gesamtantriebsdrehmoments. Dieser liegt bei weniger als 50% im ersten Abschnitt a. Im zweiten Abschnitt b wird eine Änderung des vorgegebenen Gesamtantriebsdrehmoments von allen Antriebsmotoren außer denen die einer Funktion aus der ersten Gruppe A zugeordnet sind zu mindestens 50 % übernommen. Der Antriebsmotor mit einer Funktion aus der ersten Gruppe A übernimmt einen wesentlich geringeren Anteil einer Änderung des vogegebenen Gesamtantriebsdrehmoments. Dieser Anteil liegt im zweiten Abschnitt b bei weniger als 50 %.

Zunächst wird beispielsweise bis zu einem vorgegebenen Gesamtantriebsdrehmoment von acht Drehmomenteinheiten das Drehmoment linear auf die Antriebsmotoren M verteilt, wobei das Gesamtantriebsdrehmoment hauptsächlich im vorderen Bereich der Druckmaschine vom ersten Antriebsmotor M1 im ersten Modul 3 und vom zweiten Antriebsmotor M2 im dritten Modul 4 aufgebracht wird, wie Figur 8 zeigt. Verdoppelt sich nun wieder der Drehmomentbedarf auf insgesamt sechzehn Drehmomenteinheiten, so wird das zusätzliche Drehmoment im Wesentlichen vom zweiten Antriebsmotor M2 im dritten Modul 4 und vom dritten Antriebsmotor M3 im sechsten Modul 4 aufgebracht. Den zugehörigen Drehmomentfluss zeigt Figur 9. Durch die geänderte Aufteilung des Gesamtantriebsdrehmoments entstehen auch negative Winkeldifferenzänderungen wie Figur 10 zeigt. Dabei wird ein Vorzeichenwechsel im Drehmomentfluss vermieden. Tatsächlich unterschreitet das mindestens übertragende Drehmoment innerhalb des Räderzugs den Wert von einer Einheit nicht, was eine Sicherheit gegenüber einem Vorzeichenwechsel darstellt. Figur 12 zeigt den kumulierten Lagefehler des Druckbogens beim Lauf durch die Druckmaschine. Die Volllinie zeigt den kumulierten Lagefehler bei drei Antriebsmotoren M mit der gewählten vom Gesamtantriebsdrehmoment abhängigen Aufteilung des Gesamtantriebsdrehmoments. Dieser Verlauf ergibt sich durch das dritte zuvor erläuterte Beispiel aus den Figuren 8 bis 10. Die Strichlinie zeigt den kumulierten Lagefehler bei drei Antriebsmotoren M mit einer festen Aufteilung des Gesamtantriebsdrehmoments. Dieser Verlauf ergibt sich durch das zweite zuvor erläuterte Beispiel aus den Figuren 5 bis 7. Die Strichpunktlinie zeigt den kumulierten Lagefehler bei einem Antriebsmotor M im dritten Modul 4. Dieser Verlauf ergibt sich durch das erste zuvor erläuterte Beispiel aus den Figuren 2 bis 4.

Figur 12 zeigt, wie der Verlauf des kumulierten Lagefehlers mithilfe der drei Antriebsmotoren M mit einer gewählten fixen Drehmomentaufteilung gegenüber der Verwendung eines Antriebsmotors M theoretisch verringert werden kann. Nachteilig im gewählten Beispiel sind die geringen übertragenden Drehmomente (Null Drehmomenteinheiten) zwischen dem zweiten und dritten Modul 4, wie auch zwischen dem fünften und sechsten Modul 4, wie der Figur 7 zu entnehmen ist. Diese geringen übertragenen Drehmomentwerte können leicht die zugehörigen Drehmomentrichtungen durch Störrungen ändern und so zum Abheben von Zahnflanken innerhalb des Räderzugs führen. Wird eine andere Aufteilung des Gesamtantriebsdrehmoments gewählt, um beispielsweise an jedem Ort innerhalb des Räderzugs mindestens eine Drehmomenteinheit zu übertragen, so erhöhen sich auch die Winkeldifferenzen, die sich bei einer Änderung des Drehmomentbedarfs entsprechend einstellen und der Vorteil gegenüber des in Figur 2 bis 4 dargestellten ersten Beispiels mit einem Antriebsmotor M verringert sich. Jedoch kann so die Gefahr von zu geringen übertragenen Drehmomente oder ein Abheben von Zahnflanken verringert werden.

Ein Vergleich des Verlaufs der kumulierten Lagefehler in Figur 12 zeigt, wie der entstehende kumulierte Lagefehler im Fall einer gesamtdrehmomentabhängigen Aufteilung immer wieder zum Wert Null zurück läuft und sich nicht zu höheren Beträgen aufsummiert. Dies stellt einen wesentlichen Vorteil gegenüber dem in Figur 2 bis 4 dargestellten ersten Beispiels und dem in Figur 5 bis 7 dargestellten zweiten Beispiels dar, um ein Umfangsregisterfehler oder Dubliereffekte aufgrund eines geänderten Zustands der Maschine, wie eine Änderungen der Produktionsdrehzahl, der Maschinenerwärmung oder durch einen Wiederanlauf einer Produktion, zu reduzieren.

### Bezugszeichenliste

- 1: Anleger
- 2: Ausleger
- 3: Erstes Modul
- 4: Weitere Module
- 5: Bogenlaufrichtung
- A: erste Gruppe
- B: zweite Gruppe
- C: weitere Gruppe
- M: Antriebsmotor
- M1: erster Antriebsmotor
- M2: zweiter Antriebsmotor
- M3: dritter Antriebsmotor
- a: erster Abschnitt
- b: zweiter Abschnitt
- I: Wert für ersten Antriebsmotor M1
- II: Wert für zweiten Antriebsmotor M2
- III: Wert für dritten Antriebsmotor M3
- IV: Beispielwert für vorgegebenes Gesamtantriebsdrehmoment

## Patentansprüche

1. Verfahren zur Reduzierung eines Lagefehlers einzelner Teilbilder auf einem Druckbogen in einer Druckmaschine, insbesondere einer Bogenoffsetdruckmaschine, die mit mindestens zwei Antriebsmotoren (M) zum Erzeugen eines Gesamtantriebsdrehmoments und einer Regelung zum Betreiben der Druckmaschine ausgestattet ist, **dadurch gekennzeichnet, dass** das Antriebsdrehmoment der einzelnen Antriebsmotoren (M) in Abhängigkeit des von der Regelung vorgegebenen Gesamtantriebsdrehmoments berechnet und entsprechend angepasst wird, wobei für die Berechnung Funktionen verwendet werden, die einen oder mehrere Abschnitte umfassen, wobei mindestens ein Abschnitt entweder einen degressiven, progressiven, proportionalen oder gleichbleibenden Verlauf aufweist.

2. Verfahren zur Reduzierung eines Lagefehlers einzelner Teilbilder auf einem Druckbogen in einer Druckmaschine, insbesondere einer Bogenoffsetdruckmaschine, die mit mindestens zwei Antriebsmotoren (M) zum Erzeugen eines Gesamtantriebsdrehmoments und einer Regelung zum Betreiben der Druckmaschine ausgestattet ist, **dadurch gekennzeichnet, dass** das von der Regelung vorgegebene Gesamtantriebsdrehmoment in Abhängigkeit von Zuständen der Druckmaschine, insbesondere Bogenoffsetdruckmaschine, wie Drehzahl, Ist-Strom der Antriebsmotoren und/oder Erwärmung auf die einzelnen Antriebsmotoren (M) aufgeteilt wird, wobei für die Aufteilung Funktionen verwendet werden, die einen oder mehrere Abschnitte umfassen, wobei mindestens ein Abschnitt entweder einen degressiven, progressiven, proportionalen oder gleichbleibenden Verlauf aufweist.

3. Verfahren nach Anspruch 1 oder 2, **dadurch gekennzeichnet, dass** die Summe aller Antriebsdrehmomente das von der Regelung vorgegebene Gesamtantriebsdrehmoment ergibt.

4. Verfahren nach mindestens einen der vorhergehenden Ansprüche, **dadurch gekennzeichnet, dass** die Funktionen mit Funktionseingangsgrößen mindestens einen Abschnitt aufweisen in dem eine Änderung der Funktionseingangsgrößen eine unterproportionale Änderung des kumulierten Lagefehlers erzeugt.

5. Verfahren nach mindestens einen der vorhergehenden Ansprüche, **dadurch gekennzeichnet, dass** die einzelne Funktion in jedem Abschnitt mittels einer Gradengleichung gebildet wird.

6. Verfahren nach mindestens einen der vorhergehenden Ansprüche, **dadurch gekennzeichnet, dass** die Funktionen der Antriebsmotoren (M) mindestens in eine erste Gruppe (A) und eine zweite Gruppe (B) unterteilt werden.

7. Verfahren nach Anspruch 6, **dadurch gekennzeichnet, dass** die Antriebsmotoren (M) der zweiten Gruppe (B) weniger als 50% des vorgegebenen Gesamtantriebsdrehmoments in einem ersten Abschnitt (a) übernehmen.

8. Verfahren nach Anspruch 6 oder 7, **dadurch gekennzeichnet, dass** die Antriebsmotoren (M) der ersten Gruppe (A) weniger als 50% von Änderungen des vorgegeben Gesamtantriebsdrehmoments in einem zweiten Abschnitt (b) übernehmen.

9. Vorrichtung zur Durchführung des Verfahrens nach mindestens einem der Ansprüche 1 bis 8, umfassend mindestens zwei Module (3, 4), einen Anleger (1), einen Ausleger (2), einen zentralen Regler zur Vorgabe des Gesamtantriebsdrehmoments, einer Einheit zur Berechnung der einzelnen Antriebsdrehmomente mithilfe hinterlegter Funktionen, mindestens zwei Antriebsmotoren (M) und einem Antriebsstrang zur Verbindung der einzelnen Module (3, 4).
